(19) **Europäisches Patentamt / European Patent Office / Office européen des brevets**

(11) **EP 1 649 069 B1**

(12) **FASCICULE DE BREVET EUROPEEN**

(45) Date de publication et mention de la délivrance du brevet:
**19.04.2017 Bulletin 2017/16**

(21) Numéro de dépôt: **04767627.5**

(22) Date de dépôt: **08.07.2004**

(51) Int Cl.:
*C21D 8/02* (2006.01)   *C22C 38/58* (2006.01)
*C22C 38/00* (2006.01)   *C22C 38/02* (2006.01)
*C22C 38/04* (2006.01)   *C22C 38/06* (2006.01)
*C22C 38/20* (2006.01)   *C22C 38/22* (2006.01)
*C22C 38/44* (2006.01)   *H01M 4/88* (2006.01)

(86) Numéro de dépôt international:
**PCT/FR2004/001795**

(87) Numéro de publication internationale:
**WO 2005/019483 (03.03.2005 Gazette 2005/09)**

(54) **PROCEDE DE FABRICATION DE TOLES D'ACIER AUSTENITIQUE FER-CARBONE-MANGANESE, A HAUTE RESISTANCE, EXCELLENTE TENACITE ET APTITUDE A LA MISE EN FORME A FROID, ET TOLES AINSI PRODUITES**

VERFAHREN ZUR HERSTELLUNG VON BLECHEN AUS AUSTENITISCHEM EISEN/KOHLENSTOFF/MANGAN-STAHL MIT HOHER FESTIGKEIT UND HERVORRAGENDER ZÄHIGKEIT UND KALTUMFORMBARKEIT, UND SO HERGESTELLTE BLECHE

METHOD OF PRODUCING AUSTENITIC IRON/CARBON/MANGANESE STEEL SHEETS HAVING A HIGH STRENGTH AND EXCELLENT TOUGHNESS AND BEING SUITABLE FOR COLD FORMING, AND SHEETS THUS PRODUCED

(84) Etats contractants désignés:
**AT BE BG CH CY CZ DE DK EE ES FI FR GB GR HU IE IT LI LU MC NL PL PT RO SE SI SK TR**

(30) Priorité: **22.07.2003 FR 0308953**

(43) Date de publication de la demande:
**26.04.2006 Bulletin 2006/17**

(73) Titulaire: **ArcelorMittal**
**1160 Luxembourg (LU)**

(72) Inventeurs:
• **BOUZEKRI, Mohamed**
  **F-57120 Rombas (FR)**
• **FARAL, Michel**
  **F-57000 Metz (FR)**

• **SCOTT, Colin**
  **F-57950 Maizières les Metz (FR)**

(74) Mandataire: **Lavoix**
**2, place d'Estienne d'Orves**
**75441 Paris Cedex 09 (FR)**

(56) Documents cités:
**EP-A- 1 067 203    FR-A- 2 829 775**

• **PATENT ABSTRACTS OF JAPAN vol. 017, no. 042 (C-1020), 26 janvier 1993 (1993-01-26) & JP 04 259325 A (SUMITOMO METAL IND LTD), 14 septembre 1992 (1992-09-14)**
• **PATENT ABSTRACTS OF JAPAN vol. 005, no. 195 (C-083), 11 décembre 1981 (1981-12-11) & JP 56 119722 A (SUMITOMO METAL IND LTD), 19 septembre 1981 (1981-09-19)**

**EP 1 649 069 B1**

**EP 1 649 069 B1**

**Description**

L'invention concerne la fabrication de tôles laminées à chaud et à froid d'aciers austénitiques fer-carbone-manganèse présentant de très hautes caractéristiques mécaniques, et notamment une combinaison de résistance mécanique et d'allongement à rupture particulièrement avantageuse, une excellente aptitude à la mise en forme et une résistance élevée à la rupture en présence de défauts ou de concentration de contraintes.

On sait que certaines applications, notamment dans le domaine automobile, requièrent un allégement et une résistance accrus des structures métalliques en cas de choc, ainsi qu'une bonne aptitude à l'emboutissage: Ceci nécessite l'emploi de matériaux structuraux combinant une résistance élevée à la rupture et une grande aptitude à la déformation. Dans le cas de tôles laminées à chaud, c'est-à-dire d'épaisseur allant de 0,6 à 10 mm, ces caractéristiques sont mises à profit pour la fabrication de pièces de liaison au sol ou de roues, de pièces de renfort telles que les barres anti-intrusion de portières, ou destinées à des véhicules lourds (camions, bus). Dans le cas de tôles laminées à froid (allant de 0,2 mm à 4 mm), les applications visent la fabrication de longerons absorbant l'énergie de déformation ou de berceaux moteurs ou encore de pièces de peau. Cependant, la résistance à la rupture et l'aptitude à la déformation sont des propriétés antagonistes, si bien qu'il n'est généralement pas possible d'obtenir des valeurs très élevées pour l'une des propriétés sans réduire drastiquement l'autre. Des progrès ont cependant été réalisés ces dernières années pour tenter de répondre au mieux à ces exigences, en particulier grâce au développement d'aciers dits « TRIP » (Transformation Induced Plasticity) : A un niveau de résistance de 900 MPa, ce type d'aciers ne permet cependant pas d'obtenir un taux d'allongement supérieur à 25%. Si ces caractéristiques peuvent être satisfaisantes pour un certain nombre d'applications, elles demeurent néanmoins insuffisantes dans le cas où l'on souhaite un allégement supplémentaire, et dans des conditions de sollicitations sévères telles que celles rencontrées lors de collisions automobiles.

On connaît par ailleurs des aciers austénitiques Fe-C(O à 1,5%)-Mn(15 à 35%)-Cr(0 à 20%)-Al(0,1 à 10%)-Si(0 à 4%) qui combinent une bonne résistance et une excellente ductilité: Le mode de déformation de ces aciers ne dépend que de l'énergie de défaut d'empilement ( « EDE » ) : parmi ces modes, le maclage mécanique permet d'obtenir une grande capacité d'écrouissage. En faisant obstacle à la propagation des dislocations, les macles participent ainsi à l'augmentation de la limite d'écoulement. Le mécanisme de déformation par maclage est favorisé par l'augmentation de l'énergie de défaut d'empilement, jusqu'à une limite (environ 30mJ/m$^2$) au-dessus de laquelle le glissement des dislocations parfaites devient le mécanisme de déformation dominant. L'EDE augmente avec la teneur en carbone, en manganèse, et en aluminium. Le brevet EP 0573641 révèle un acier austénitique laminé à chaud ou à froid, comprenant moins de 1,5%C, 15-35%Mn, 0,1-6%d'aluminium, dont la résistance est supérieure à 490 MPa et l'allongement supérieur à 40% à température ambiante.

Cependant, le laminage de ce type de compositions nécessite des précautions particulières afin d'éviter la formation de défauts.

Il existe également un besoin non résolu de disposer de tôles d'acier présentant des combinaisons (résistance-allongement à rupture) encore plus favorables, tout en limitant la teneur en éléments d'alliage coûteux.

EP1067203 décrit un procédé de production de bandes en alliage fer-carbone-manganèse, selon lequel : on coule sur une machine de coulée une bande mince d'épaisseur 1,5 à 10 mm directement à partir d'un métal liquide de composition en pourcentages pondéraux : C compris entre 0,001 et 1,6% ; Mn compris entre 6 et 30% ; Si $\leq$ 2,5% ; Al $\leq$ 6% ; Cr $\leq$ 10% et avec (Mn + Ni + As) $\geq$ 0,2% ; (S + Se + Te) $\leq$ 0,5% ; (V + Ti + Nb + B + Zr + terres rares) $\leq$ 3% ; (Mo + W) $\leq$ 0,5% ; N $\leq$ 0,3% ; Cu $\leq$ 5%, le reste étant du fer et des impuretés résultant de l'élaboration ; on lamine à froid ladite bande à un taux de réduction compris entre 10 et 90% en une ou plusieurs étapes ; et on effectue un recuit de recristallisation de ladite bande. L'invention concerne également une bande susceptible d'être produite par ce procédé.

En outre, l'expérience montre qu'en dépit de valeurs favorables d'allongement en traction uniaxiale, la mise en forme à froid (emboutissage, pliage plus ou moins complexe) peut poser des difficultés dans certains cas.

De plus, les pièces réalisées à partir de ces tôles comportant très souvent des zones correspondant à des concentrations de contraintes, il existe un besoin important de disposer d'aciers à ténacité élevée, c'est à dire dont la résistance à la rupture ou à la déchirure en présence de défauts est importante, en particulier en cas de sollicitation dynamique. Cette propriété est d'autant plus à prendre en considération que les applications de ces nuances, par exemple dans l'automobile, concernent précisément des zones très fortement sollicitées et/ou des pièces de sécurité.

Le but de l'invention est donc de disposer d'une tôle ou d'un produit d'acier laminé à chaud ou à froid, de fabrication économique, présentant une résistance supérieure à 900 MPa après laminage à chaud, supérieure à 950MPa après laminage à froid, une combinaison résistance-allongement à rupture telle que le produit P = résistance (exprimé en MPa) x allongement à rupture (en %), soit supérieur à 45000, aisément laminable à chaud, particulièrement apte à la mise en forme à froid, et présentant une très bonne ténacité en conditions de sollicitation statique ou dynamique.

A cet effet, l'invention a pour objet une tôle laminée à chaud en acier austénitique fer-carbone-manganèse dont la résistance est supérieure à 900 MPa, dont le produit (résistance (MPa) x allongement à rupture (%)) est supérieur à 45000, dont la composition chimique comprend, les teneurs étant exprimées en poids: 0,5% $\leq$ C $\leq$ 0,7%, 17%$\leq$ Mn $\leq$ 24%, Si $\leq$ 3%, Al $\leq$ 0,050%, S $\leq$ 0,030%, P$\leq$ 0,080%, N $\leq$ 0,1%, et à titre optionnel, un ou plusieurs éléments tels que Cr ≤ 1%, Mo ≤ 0,40%, Ni ≤ 1%, Cu < 5%, Ti ≤ 0,50%, Nb ≤ 0,50%, V ≤ 0,50%, le reste de la composition étant constitué de fer et d'impuretés inévitables résultant de l'élaboration, la fraction recristallisée de l'acier étant supérieure à 75%, la fraction surfacique de carbures précipités de l'acier étant inférieure à 1,5%, la taille moyenne de grain de l'acier étant inférieure à 18 microns.

L'invention a également pour objet une tôle laminée à chaud en acier austénitique fer-carbone-manganèse dont la résistance est supérieure à 900 MPa, dont le produit (résistance (MPa) x allongement à rupture (%)) est supérieur à 60000, dont la composition chimique comprend, les teneurs étant exprimées en poids: 0,5% ≤ C ≤ 0,7%, 17%≤ Mn ≤ 24%, Si ≤ 3%, Al ≤ 0,050%, S ≤ 0,030%, P≤ 0,080%, N ≤ 0,1%, et à titre optionnel, un ou plusieurs éléments tels que Cr ≤ 1%, Mo ≤ 0,40%, Ni ≤ 1%, Cu < 5%, Ti ≤ 0,50%, Nb ≤ 0,50%, V ≤ 0,50%, le reste de la composition étant constitué de fer et d'impuretés inévitables résultant de l'élaboration, la fraction recristallisée de l'acier étant égale à 100%, la fraction surfacique de carbures précipités de l'acier étant égale à 0%, la taille moyenne de grain de l'acier étant inférieure à 10 microns.

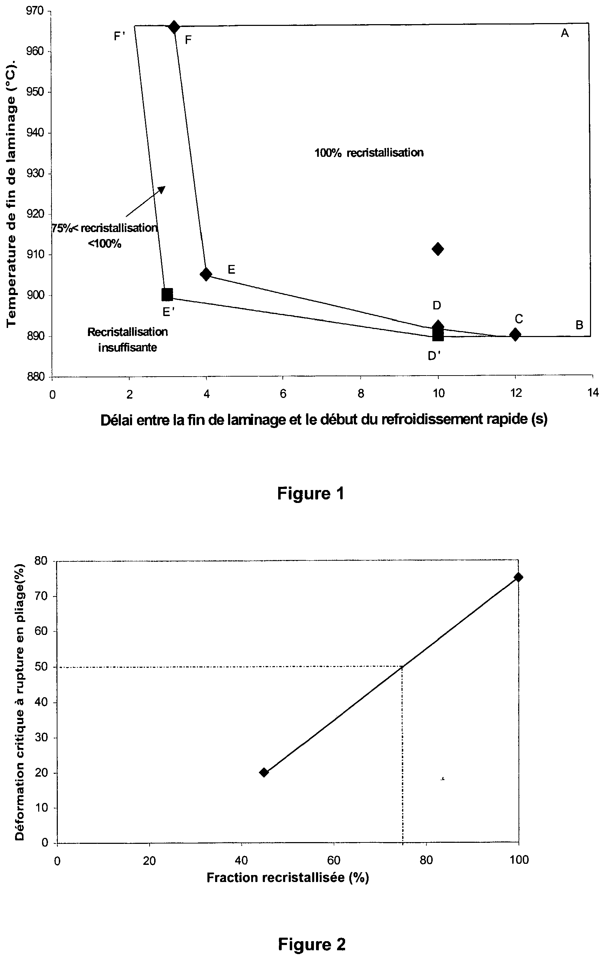

L'invention a également pour objet un procédé de fabrication d'une tôle laminée à chaud en acier fer-carbone-manganèse selon lequel on élabore un acier dont la composition chimique comprend, les teneurs étant exprimées en poids: 0,5% ≤ C ≤ 0,7%, 17%≤ Mn ≤ 24%, Si ≤ 3%, Al ≤ 0,050%, S ≤ 0,030%, P≤ 0,080%, N ≤ 0,1%, et à titre optionnel, un ou plusieurs éléments tels que Cr ≤ 1%, Mo ≤ 0,40%, Ni ≤ 1%, Cu ≤ 5%, Ti ≤ 0,50%, Nb ≤ 0,50%, V ≤ 0,50%, le reste de la composition étant constitué de fer et d'impuretés inévitables résultant de l'élaboration, on procède à la coulée d'un demi-produit à partir de cet acier, on porte le demi-produit de ladite composition d'acier à une température comprise entre 1100 et 1300°C, on lamine le demi-produit jusqu'à une température de fin de laminage supérieure ou égale à 890°C, on observe un délai entre ladite fin de laminage et un refroidissement rapide ultérieur, de telle sorte que le point défini par ledit délai et ladite température de fin de laminage se trouve situé au sein d'une aire définie par le diagramme ABCD'E'F'A, et préférentiellement ABCDEFA, de la figure 1, on bobine la tôle à une température inférieure à 580°C.

Préférentiellement, la coulée du demi-produit est effectuée sous forme de coulée de bandes minces entre cylindres d'acier.

Selon une autre caractéristique préférée, on applique sur la tôle laminée à chaud, à l'issue du bobinage, une déformation à froid avec un taux de déformation équivalente inférieur ou égal à 30%.

L'invention a également pour objet une tôle laminée à froid en acier austénitique fer-carbone-manganèse dont la résistance est supérieure à 950MPa, dont le produit résistance (MPa) x allongement à rupture (%) est supérieur à 45000, dont la composition chimique comprend, les teneurs étant exprimées en poids: 0,5% ≤ C ≤ 0,7%, 17%≤ Mn ≤ 24%, Si ≤ 3%, Al ≤ 0,050%, S ≤ 0,030%, P≤ 0,080%, N ≤ 0,1%, et à titre optionnel, un ou plusieurs éléments tels que Cr ≤ 1%, Mo ≤ 0,40%, Ni ≤ 1%, Cu ≤ 5%, Ti ≤ 0,50%, Nb ≤ 0,50%, V ≤ 0,50%, le reste de la composition étant constitué de fer et d'impuretés inévitables résultant de l'élaboration, la fraction recristallisée de la structure de l'acier étant supérieure à 75%, la fraction surfacique de carbures précipités de l'acier étant inférieure à 1,5%, la taille moyenne de grains de l'acier étant inférieure à 6 microns.

L'invention a également pour objet un procédé de fabrication d'une tôle laminée à froid en acier austénitique fer-carbone-manganèse, caractérisé en ce que l'on approvisionne une tôle laminée à chaud obtenue selon l'un des procédés décrits ci-dessus, on effectue au moins une étape de laminage à froid suivi d'un recuit, chaque étape consistant à laminer à froid la tôle, recuire celle-ci à une température comprise entre 600 et 900°C, pendant une durée comprise entre 10 et 500 secondes, suivi d'un refroidissement dont la vitesse est supérieure à 0,5°C/s, la taille de grain austénitique avant la dernière étape de laminage à froid suivi d'un recuit, étant inférieure à 18 microns.

Préférentiellement, on effectue, sur la tôle laminée à froid après le recuit final, une déformation à froid avec un taux de déformation équivalente inférieur ou égal à 30%.

L'invention a également pour objet l'utilisation d'une tôle laminée à chaud ou à froid décrite ci-dessus, ou l'utilisation d'une tôle fabriquée au moyen d'un procédé décrit ci-dessus, pour la fabrication d'éléments de renfort sollicités en conditions statiques ou dynamiques.

D'autres caractéristiques et avantages de l'invention apparaîtront au cours de la description ci-dessous, donnée à titre d'exemple et faite en référence aux figures annexées suivantes:

La figure 1 présente l'influence de la température de fin de laminage à chaud et du délai entre la fin de laminage à chaud et le début d'un refroidissement rapide ultérieur, sur la fraction recristallisée après bobinage.

La figure 2 montre l'influence de la fraction recristallisée sur la déformation critique à rupture en pliage.

La figure 3 présente l'influence de la température de bobinage sur la fraction surfacique de carbures précipités.

La figure 4 est une micrographie illustrant un exemple de précipitation intergranulaire de carbures.

La figure 5 illustre l'influence de la fraction surfacique de carbures précipités, à taille de grains constante, sur le produit P (résistance x allongement à rupture).

La figure 6 montre l'influence de la taille de grain austénitique moyenne sur la résistance de tôles d'aciers Fe-C-Mn, en particulier laminées à chaud.

La figure 7 illustre l'influence de la déformation équivalente sur la résistance d'une tôle d'acier Fe-C-Mn laminée à froid.

La figure 8 présente l'influence de la taille de grain austénitique moyenne sur la résistance de tôles, en particulier laminées à froid.

La figure 9 illustre l'influence de la taille de grain austénitique moyenne sur l'énergie de déchirure spécifique de tôles laminées à froid.

La figure 10 présente l'influence de la taille de grain austénitique moyenne sur l'énergie de rupture Charpy de tôles laminées à froid.

La figure 11 illustre l'influence de la taille de grains austénitique moyenne sur la déformation critique à la fissuration en pliage.

La figure 12 présente la profondeur maximale d'emboutissage avant rupture en fonction de la taille de grain austénitique moyenne.

Après de nombreux essais, les inventeurs ont montré que les différentes exigences rapportées ci-dessus peuvent être satisfaites en observant les conditions suivantes:

En ce qui concerne la composition chimique de l'acier, le carbone joue un rôle très important sur la formation de la microstructure: il augmente l'EDE et favorise la stabilité de la phase austénitique. En combinaison avec une teneur en manganèse allant de 17 à 24% en poids, cette stabilité est obtenue pour une teneur en carbone supérieure ou égale à 0,5%. Cependant, pour une teneur en carbone supérieure à 0,7% il devient difficile d'éviter une précipitation de carbures qui intervient au cours de certains cycles thermiques de fabrication industrielle, en particulier lors du refroidissement au bobinage, et qui dégrade la ductilité et la ténacité.

Le manganèse est également un élément indispensable pour accroître la résistance, augmenter l'énergie de défaut d'empilement et stabiliser la phase austénitique. Si sa teneur est inférieure à 17%, il existe un risque de formation de phases martensitiques qui diminuent très notablement l'aptitude à la déformation. Par ailleurs, lorsque la teneur en manganèse est supérieure à 24%, la ductilité à température ambiante est dégradée. De plus, pour des questions de coût, il n'est pas souhaitable que la teneur en manganèse soit élevée.

L'aluminium est un élément particulièrement efficace pour la désoxydation de l'acier. Comme le carbone, il augmente l'énergie de défaut d'empilement. Cependant, sa présence excessive dans des aciers à forte teneur en manganèse présente un inconvénient: En effet, le manganèse augmente la solubilité de l'azote dans le fer liquide, et si une quantité d'aluminium trop importante est présente dans l'acier, l'azote se combinant avec l'aluminium précipite sous forme de nitrures d'aluminium gênant la migration des joints de grain lors de la transformation à chaud et augmente très notablement le risque d'apparitions de fissures. Une teneur en Al inférieure ou égale à 0,050 % permet d'éviter une précipitation d'AlN. Corrélativement, la teneur en azote doit être inférieure ou égale à 0,1% afin d'éviter cette précipitation et la formation de défauts volumiques (soufflures) lors de la solidification.

Le silicium est également un élément efficace pour désoxyder l'acier ainsi que pour durcir en phase solide. Cependant, au-delà d'une teneur de 3%, il tend à former des oxydes indésirables lors de certains procédés d'assemblage et doit donc être tenu inférieur à cette limite.

Le soufre et le phosphore sont des impuretés fragilisant les joints de grains. Leur teneur respective doit être inférieure ou égale à 0,030 et 0,080% afin de maintenir une ductilité à chaud suffisante.

Le chrome et le nickel peuvent être utilisés à titre optionnel pour augmenter la résistance de l'acier par durcissement en solution solide. Cependant, le chrome diminuant l'énergie de défaut d'empilement, sa teneur doit être inférieure ou égale à 1%. Le nickel contribue à obtenir un allongement à rupture important, et augmente en particulier la ténacité. Cependant, il est également souhaitable, pour des questions de coûts, de limiter la teneur en nickel à une teneur maximale inférieure ou égale à 1%. Pour des raisons similaires, le molybdène peut être ajouté en quantité inférieure ou égale à 0,40%.

De même, à titre optionnel, une addition de cuivre jusqu'à une teneur inférieure ou égale à 5% est un moyen de durcir l'acier par précipitation de cuivre métallique. Cependant, au-delà de cette teneur, le cuivre est responsable de l'apparition de défauts de surface en tôle à chaud.

Le titane, le niobium et le vanadium sont également des éléments pouvant être utilisés optionnellement pour obtenir un durcissement par précipitation de carbonitrures. Cependant, lorsque la teneur en Nb ou en V, ou en Ti est supérieure à 0,50%, une précipitation excessive de carbonitrures peut provoquer une réduction de la ténacité, ce qui doit être évité.

La mise en oeuvre du procédé de fabrication selon l'invention est la suivante: On élabore un acier dont la composition a été exposée ci-dessus. Cette élaboration peut être suivie d'une coulée en lingots, ou en continu sous forme de brames d'épaisseur de l'ordre de 200mm. On peut également effectuer la coulée sous forme de brames minces, de quelques dizaines de millimètres d'épaisseur. Bien entendu, même si la description présente illustre l'application de l'invention aux produits plats, celle-ci peut être appliquée de la même façon à la fabrication de produits longs en acier Fe-C-Mn.

Ces demi-produits coulés sont tout d'abord portés à une température comprise entre 1100 et 1300°C. Ceci a

**EP 1 649 069 B1**

pour but d'atteindre en tout point les domaines de température favorables aux déformations élevées que va subir l'acier lors du laminage. Cependant, la température de réchauffage ne doit pas être supérieure à 1300°C, sous peine d'être trop proche de la température de solidus qui pourrait être atteinte dans d'éventuelles zones ségrégées en manganèse et/ou en carbone, et de provoquer un début de passage local par un état liquide qui serait néfaste pour la mise en forme à chaud. Naturellement, dans le cas d'une coulée directe de brames minces, l'étape de laminage à chaud de ces demi-produits débutant entre 1300 et 1100°C peut se faire directement après coulée sans passer par l'étape de réchauffage intermédiaire.

On lamine à chaud le demi-produit, par exemple pour arriver à une épaisseur de bande laminée à chaud de 2 à 3 millimètres d'épaisseur. La faible teneur en aluminium de l'acier selon l'invention permet d'éviter une précipitation excessive d'AlN qui nuirait à la déformabilité à chaud lors du laminage. Afin d'éviter tout problème de fissuration par manque de ductilité, la température de fin de laminage doit être supérieure ou égale à 890°C.

Par ailleurs, on sait que les lignes industrielles comportent des dispositifs de refroidissement rapide, par exemple par pulvérisation d'eau, situés entre la dernière étape de laminage à chaud, et le bobinage. Ces dispositifs accélèrent la vitesse de refroidissement naturel des produits, de façon à ce que la longueur des lignes industrielles ne soit pas excessive.

En combinaison avec une température de fin de laminage donnée, les inventeurs ont montré, comme l'indique la figure 1, qu'il convenait de respecter un délai minimal entre la fin du laminage et le début de refroidissement rapide, afin d'obtenir une recristallisation satisfaisante du produit laminé après bobinage. Durant ce délai, le produit subit un refroidissement naturel. Ainsi, un délai minimal de 12s à 890°C, ou de 4s à 905°C permet d'obtenir une recristallisation totale. Plus généralement, des paramètres (température, délai minimal) se situant à l'intérieur du domaine noté ABCDEFA sur la figure 1 conduisent à une recristallisation totale dans des conditions de productivité satisfaisante. Une recristallisation correspondant à une fraction minimale de 75% est obtenue lorsque ces conditions (température, délai minimal) se situent à l'intérieur du domaine noté ABCD'E'F'A. La figure 2 présente l'influence de la fraction recristallisée sur la déformation critique à l'apparition de fissures en pliage. Une aptitude au pliage élevée, et plus généralement une grande aptitude à la déformation, requiert des valeurs de déformation critique élevée, supérieures à 50%. La figure 2 montre que ceci est obtenu lorsque la fraction recristallisée après laminage est supérieure à 75%.

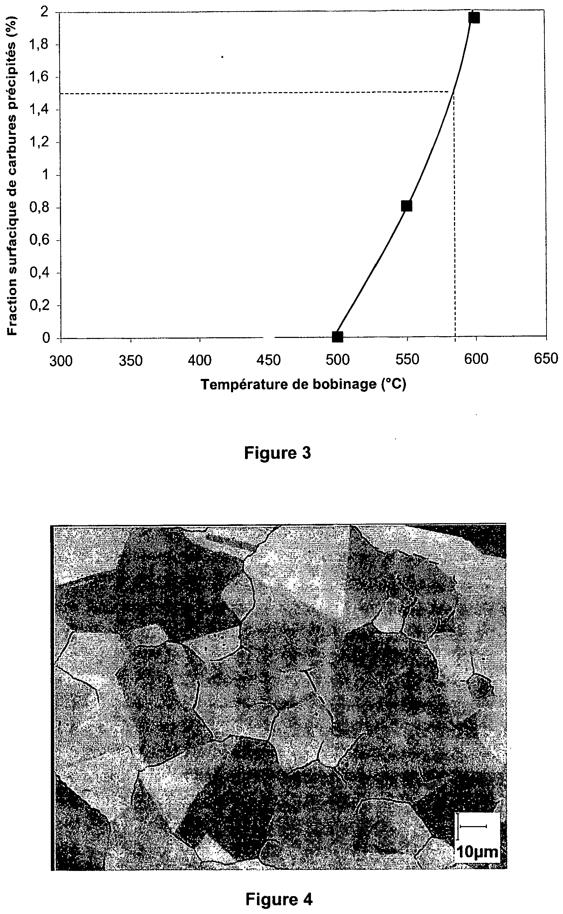

Après laminage, la bande doit être bobinée à une température telle qu'une précipitation de carbures (essentiellement de la cémentite $(Fe,Mn)_3C$) n'intervienne pas significativement, ce qui conduirait, comme on le verra, à une diminution de certaines propriétés mécaniques. La figure 3 illustre l'influence de la température de bobinage sur la fraction surfacique de carbures précipités. La précipitation de carbures intervient essentiellement aux joints de grains austénitiques, comme le montre la micrographie de la figure 4.

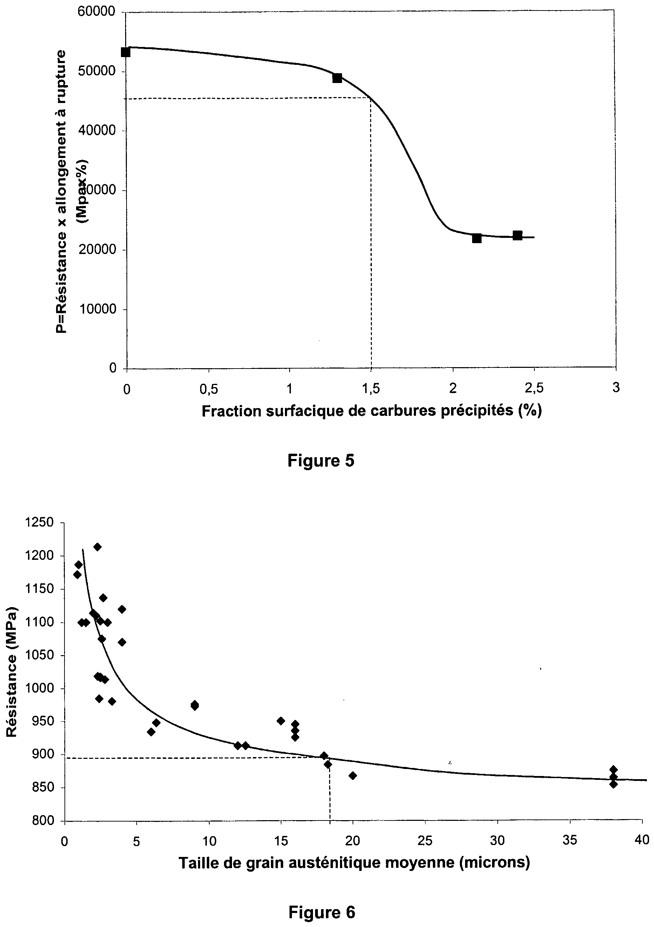

La figure 5 montre l'influence de cette précipitation sur le produit P de la résistance et de l'allongement à rupture après laminage à chaud, à taille de grains constante. Des valeurs élevées de ce paramètre expriment donc une combinaison de haute résistance associée à une ductilité élevée. Afin d'obtenir une valeur de P supérieure à 45000 (MPa x %), il est nécessaire que la fraction surfacique de carbures précipités soit inférieure à 1,5%. Ce caractère néfaste de la précipitation de carbures s'exerçant aussi bien sur tôle laminée à chaud que sur tôle laminée à froid et recuite, il importe de respecter cette valeur maximale admissible de précipitation dans ces deux situations.

D'après les résultats présentés à la figure 3, on voit que cette condition est satisfaite sur produit laminé à chaud lorsque la température de bobinage est inférieure à 580°C.

Par ailleurs, la figure 6 illustre l'influence de la taille moyenne de grain austénitique sur la résistance: Dans le cas de produits laminés à chaud, on voit ainsi que la taille de grain ne doit pas excéder une valeur de 18 microns sous peine que la valeur de la résistance ne soit inférieure à 900 MPa.

Les inventeurs ont également mis en évidence que des propriétés mécaniques encore plus élevées sont obtenues dans les conditions suivantes sur produit laminé à chaud : La combinaison simultanée d'une taille de grain inférieure à 10 microns, d'une fraction recristallisée égale à 100% et d'une fraction surfacique de carbures précipités égale à 0%, conduit à une valeur du produit P (Rm x allongement à rupture) supérieur à 60000.

On peut utiliser la bande laminée à chaud obtenue par le procédé décrit, ou procéder à un laminage à froid ultérieur suivi d'un recuit. Cette étape supplémentaire permet d'obtenir une taille de grain inférieure à celle obtenue sur bande à chaud, et donc à des propriétés de résistance plus élevées. Elle doit naturellement être mise en oeuvre si l'on cherche à obtenir des produits d'épaisseur plus fine, allant typiquement de 0,2 mm à 4 mm.

Partant d'un produit laminé à chaud obtenu par le procédé décrit ci-dessus, on effectue un laminage à froid après avoir éventuellement réalisé un décapage préalable de façon usuelle.

Après cette étape de laminage, le grain est très écroui, et il convient d'effectuer un recuit de recristallisation : ce traitement a pour effet de restaurer la ductilité et de diminuer simultanément la résistance. Le traitement thermique de recuit doit donc être ajusté de manière à obtenir le couple (résistance-allongement à rupture) souhaité dans l'application. Ce recuit est effectué de préférence en continu.

Ce recuit s'effectue à une température de 600 à 900°C, pendant une durée de 10 à 500 secondes, la vitesse de refroidissement en fin de maintien doit être suffisamment rapide, supérieure à 0,5°C/s, pour éviter la précipitation de

5

carbures. En partant d'une taille moyenne de grain initiale inférieure ou égale à 18 microns sur produit laminé à chaud, ces paramètres permettent d'obtenir une taille moyenne de grains allant de 0, 5 à 15 microns sur tôles laminées à froid.

Selon un mode de réalisation particulier, on peut diminuer l'épaisseur par laminage à froid, non pas au moyen d'une seule étape de laminage, mais en deux étapes ou plus, chacune des étapes de laminage étant suivie d'un recuit. La taille du grain précédant la dernière étape de laminage et de recuit ne doit pas excéder 18 microns, sous peine que la résistance et l'aptitude à la déformation du produit final ne soient réduites.

Pour les mêmes raisons que celles exposées pour les tôles laminées à chaud, les tôles laminées à froid doivent présenter une fraction recristallisée suffisante, supérieure à 75% pour obtenir une déformabilité satisfaisante lors de la mise en forme à froid.

De même que pour les tôles laminées à chaud, la fraction surfacique en carbures précipités doit être inférieure à 1,5% afin que le produit P (Rm x Allongement à rupture) soit supérieur à 45000 (MPa x %).

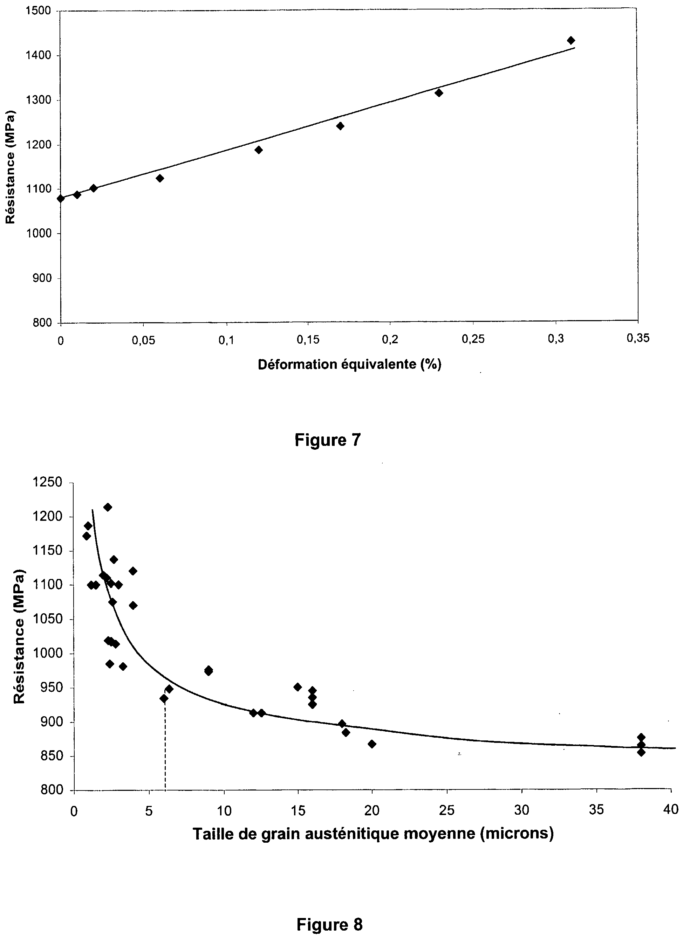

Les tôles d'acier obtenues après laminage à chaud ou à froid par le procédé selon l'invention sont caractérisées par une excellente ductilité. Compte tenu de la grande réserve de plasticité, on peut chercher à obtenir des valeurs de résistance encore plus élevées au prix d'un léger abaissement de la ductilité: partant d'une tôle laminée à chaud, à l'issue du bobinage, ou laminée à froid et recuite selon le procédé décrit ci-dessus, on applique à celle-ci une déformation à froid supplémentaire après le recuit final, par exemple par skin-pass, planage sous traction en flexion alternée, étirage simple, ou tout autre procédé convenable. La figure 7 indique l'influence de la déformation équivalente sur la résistance: dans un large domaine, l'influence de la déformation est relativement linéaire: en moyenne, 1% de déformation permet d'augmenter la résistance de 10 MPa. Cependant, lorsque la déformation supplémentaire excède 30%, la ductilité initiale du produit est réduite de façon excessive, et il convient de ne pas dépasser ce seuil.

Comme le montre la figure 8, une taille moyenne de grains sur tôle laminée à froid inférieure à 6 microns permet d'obtenir une résistance supérieure à 950 MPa.

A titre d'exemple, les résultats suivants vont montrer d'autres avantages conférés par l'invention, en particulier en ce qui concerne l'aptitude à la déformation avec ou sans présence d'un défaut, en mode de sollicitation statique ou dynamique.

Exemple 1:

On a élaboré un acier de composition suivante (teneurs exprimées en pourcentage pondéral) : C :0,6%, Mn : 22%, Si : 0,2%. Un demi-produit a été réchauffé à 1185°C, laminé à chaud jusqu'à une température de 965°C pour atteindre une épaisseur de 3,6mm. On a observé un temps d'attente de 3,5 s avant refroidissement. Le bobinage a été effectué à une température inférieure à 450°C. Ces conditions de fabrication, repérées « I » dans le tableau 1 ci-dessous correspondent à l'invention. La taille moyenne de grain ainsi obtenue est de 9,5 microns, la structure recristallisée à 100%, la fraction de carbures égale à 0%. Les caractéristiques mécaniques statiques obtenues sur cette tôle laminée à chaud sont particulièrement élevées : Résistance : 1012 MPa. Allongement à rupture : 65,4%. Produit P : 66184.

Partant de cette même composition, on a réalisé un schéma thermomécanique ne correspondant pas aux conditions de l'invention, et qui conduit à une fraction surfacique de carbures précipités supérieure à 1,5% (condition repérée « R3 »).

On a également comparé l'acier selon l'invention à un acier laminé à chaud de référence repéré « R4 » dont le niveau de résistance est très comparable : il s'agit d'un acier TRIP (« Transformation Induced Plasticity ») à structure complexe (ferrite, bainite, austénite, martensite). Cet acier a la composition suivante (teneurs en % pondéral) : C : 0,20, Mn : 1, 7, Si : 1,6, S : 0,003, P : 0,080, Al : 0,050, Cu, Cr, Ni, Mo, N : 0,001.

Des essais de rupture dynamique ont été effectués sur des éprouvettes de type Charpy V à épaisseur réduite (e=3mm) à des températures de +20 et de - 60°C. Les résultats de ces essais sont présentés au tableau 1.

Tableau 1 : Résultats d'essais Charpy V sur tôles laminées à chaud

| | Repère | Energie de rupture Charpy à +20°C (Joules) | Energie de rupture Charpy à -60°C (Joules) |
|---|---|---|---|
| Invention | I | 44 | 36 |
| Référence | R3 | 33 | 29 |
| | R4 | 25 | 9 |

L'acier selon l'invention présente des caractéristiques de ténacité nettement supérieures à celles des aciers de référence. Cette supériorité se manifeste à température ambiante, ainsi que dans des conditions sévères de sollicitation à très basse température. Il résout donc parfaitement le problème d'obtention d'une très bonne ténacité en conditions dynamiques

Exemple 2 :

Des aciers dont la composition figure au tableau 2 ci-dessous ont été élaborés (compositions exprimées en pourcentage pondéral). Outre les aciers I1 et I2, on a indiqué à titre de comparaison la composition d'aciers de référence : Il s'agit d'aciers Dual Phase (R1), ou TRIP («Transformation Induced Plasticity ») (R2) dont le niveau de résistance (1000 MPa) se trouve dans une gamme comparable.

Des demi-produits d'aciers I1 et I2 ont été réchauffés à 1200°C, laminés à chaud jusqu'à une température de 920°C pour les ramener à une épaisseur de 3 mm, puis, après un temps d'attente de 10 secondes avant refroidissement, bobinés à la température de 450°C. La taille moyenne de grain obtenue dans ces conditions est de 10 microns. La structure est totalement recristallisée, sans carbures précipités.

Tableau 2 : Composition des aciers

| Acier | C | Mn | Si | S | P | Al | Cu | Cr | Ni | Mo | N |
|---|---|---|---|---|---|---|---|---|---|---|---|
| I1 | 0,61 | 21,5 | 0,49 | 0,001 | 0,016 | 0,003 | 0,02 | 0,053 | 0,044 | 0,009 | 0,01 |
| I2 | 0,68 | 22,8 | 0,17 | 0,001 | 0,004 | 0,005 | 0,005 | 0,005 | 0,005 | 0,01 | 0,003 |
| R1 | 0,19 | 1,9 | 0,33 | 0,003 | 0,03 | 0,025 | 0,019 | 0,02 | | 0,09 | |
| R2 | 0,20 | 1,7 | 1,6 | 0,003 | 0,080 | 0,050 | 0,001 | 0,001 | 0,001 | 0,001 | 0,001 |

L'acier I1 a été ensuite laminé à froid, puis recuit dans des conditions conduisant à différentes tailles de grain austénitique allant de 3 à 100 microns. Le tableau 3 rassemble les conditions de recuit et de recristallisation (conditions a) à d)), le tableau 4 les caractéristiques mécaniques de traction : résistance, allongement à rupture, et le produit P (résistance x allongement à rupture) obtenu dans ces conditions.

Dans la condition de fabrication b), la taille de grain précédant le laminage à froid et le recuit à 800°C est de 100 microns.

On mentionnera qu'un taux de réduction au laminage à froid de 66% associé à un recuit de 650°C pendant 1 seconde ne conduit qu'à une recristallisation partielle de 45%. La taille de grain de la fraction recristallisée est très dispersée et varie de 1 à 10 microns.

L'acier I2 a été également laminé à froid avec un taux de 55% recuit à 700°C pendant 120 secondes, et refroidi à l'air, à une vitesse supérieure à 0,5°C/s (condition e), tableau 3). Une taille moyenne de grain de 1,5 microns et une fraction surfacique de carbures précipités de 1% sont ainsi obtenues.

En partant de la condition e), un traitement thermique ultérieur avec un maintien à 850°C pendant 60 secondes suivi d'un refroidissement à l'eau (condition f), tableau 3) permet de réduire cette fraction de carbures précipités sans grossissement excessif des grains.

Tableau 3 : Conditions de laminage à froid et de recuit

| Acier | | Taille moyenne de grains Microstructure | Taux de laminage à froid (%) | Température de recuit (°C) | Temps de recuit (s) |
|---|---|---|---|---|---|
| I1 | a)* | 3 microns | 60 | 700 | 120 |
| | b) | 15 microns | 16 | 800 | 240 |
| | c) | 100 microns | 50 | 1200 | 180 |
| | d) | Recristallisation : 45% | 66 | 650 | 1 |
| I2 | e) * | 1.5 microns avec carbures | 55 | 700 | 120s+ ref. lent |
| | f)* | 4 microns | 55+5 | 700+850 | 120s+ref.lent+ 60s+ref. Eau |
| *: selon l'invention | | | | | |

Tableau 4 : Caractéristiques mécaniques de traction obtenues

| Acier | Conditions | Taille moyenne de grains Microstructure | Résistance(MPa) | Allongement à rupture (%) | P= RmxA (MPax%) |
|---|---|---|---|---|---|
| I1 | a)* | 3 microns | 1130 | 55 | 62150 |
| | b) | 15 microns | 950 | 30 | 28500 |
| | c) | 100 microns | 850 | 40 | 34000 |
| | d) | Recristallisation : 45% | 1200 | 25 | 30000 |
| I2 | e)* | 1.5 microns avec 1% carbures | 1100 | 50 | 55000 |
| | f)* | 4 microns | 1070 | 50 | 53500 |
| *: selon l'invention | | | | | |

Les conditions de fabrication a) de l'acier correspondent à celles de l'invention, et se traduisent par des valeurs élevées de résistance et du paramètre P. Dans la condition b), la taille de grain de 100 microns avant laminage à froid excède la taille de grain de 18 microns mentionnée ci-dessus, et la taille de grain finale (15 microns) est supérieure à la taille de grain de 6 microns également mentionnée ci-dessus. Dans la condition c), la taille de grain de 100 microns sur tôle laminée à froid est également excessive. En conséquence, les conditions b) et c) conduisent à des valeurs non satisfaisantes du paramètre P ou de la résistance.

La condition d) correspond à une situation où la recristallisation est insuffisante (fraction recristallisée : 45%, inférieure à la valeur de 75% mentionnée précédemment), ce qui se traduit par une faible valeur du paramètre P.

Dans le cas de l'acier 12, les conditions de fabrication e) sont associées à une taille de grain fine de 1,5 microns, et à une quantité de carbures précipités inférieure à 1,5%. De même que pour l'acier f), la fine taille de grain se traduit par des valeurs élevées de résistance et du paramètre P.

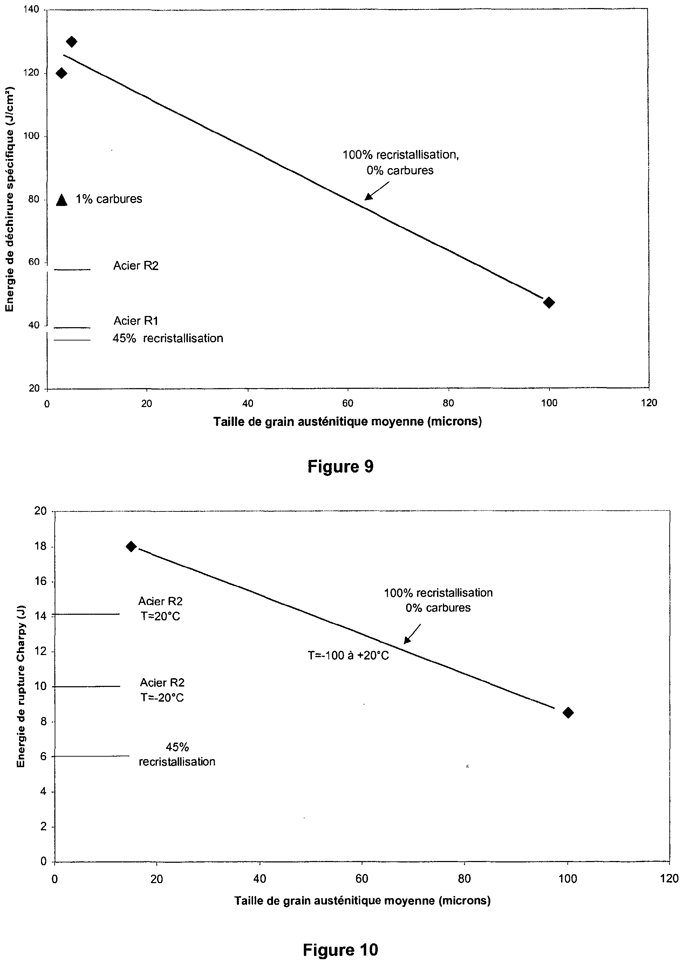

En outre, des essais de résistance à la déchirure ont été menés sur des éprouvettes de type « CT » (Compact Tension Test) de 36x55mm$^2$ comportant une entaille initiale d'une profondeur de 8 mm. Les essais sont effectués à température ambiante, et comportent un enregistrement de l'effort et du déplacement. L'énergie de résistance à la déchirure des différents aciers, évaluée par l'aire sous la courbe du diagramme (force-déplacement), est rapportée à la surface de rupture de façon à évaluer une énergie spécifique de déchirure. La figure 9 indique que des aciers à faible taille de grain, sans carbures précipités, recristallisés, présentent les meilleures caractéristiques de résistance à la déchirure. A taille de grain semblable, une précipitation de 1% de carbures diminue la ténacité d'environ un tiers. Une résistance à la déchirure très inférieure est également observée lorsque la taille moyenne de grain est accrue jusqu'à 100 microns, ou lorsque la recristallisation est très insuffisante.

La figure 9 met également en évidence le fait que les tôles fabriquées selon l'invention offrent de meilleures caractéristiques de ténacité que les aciers de référence R1 ou R2, puisque, à résistance équivalente, la résistance à la déchirure est de deux à trois fois supérieure à celle de ces aciers.

Par ailleurs, des essais de rupture dynamique ont été menés sur éprouvette de type Charpy V à épaisseur réduite (e=1 à 1,3mm) dans une gamme allant de 20 à -100°C. Aucune diminution de l'énergie de rupture n'a été constatée aux basses températures. Pour différentes conditions de laminage à froid et de recuit de l'acier I1, l'évolution de l'énergie de rupture avec la taille de grains est indiquée à la figure 10. D'une façon analogue à ce qui avait été noté en déchirure statique, une taille de grains trop importante ou une recristallisation insuffisante réduisent l'énergie de rupture. A titre de comparaison, on a également porté les valeurs d'énergie de rupture à 20 ou - 20°C de l'acier R2 ci-dessus : on notera que les aciers à grains fins de l'invention permettent d'obtenir des valeurs de ténacité en conditions dynamiques supérieures à celles de cet acier de référence. De plus, comme on l'a mentionné ci-dessus, les aciers suivant l'invention sont pratiquement insensibles aux variations de température, contrairement aux aciers de référence qui présentent une température de transition ductile-fragile. Ainsi, même en cas de chocs très sévères (températures de service très basses, vitesses de déformation importantes) l'utilisation d'aciers de l'invention permet de se prémunir du risque de rupture brutale.

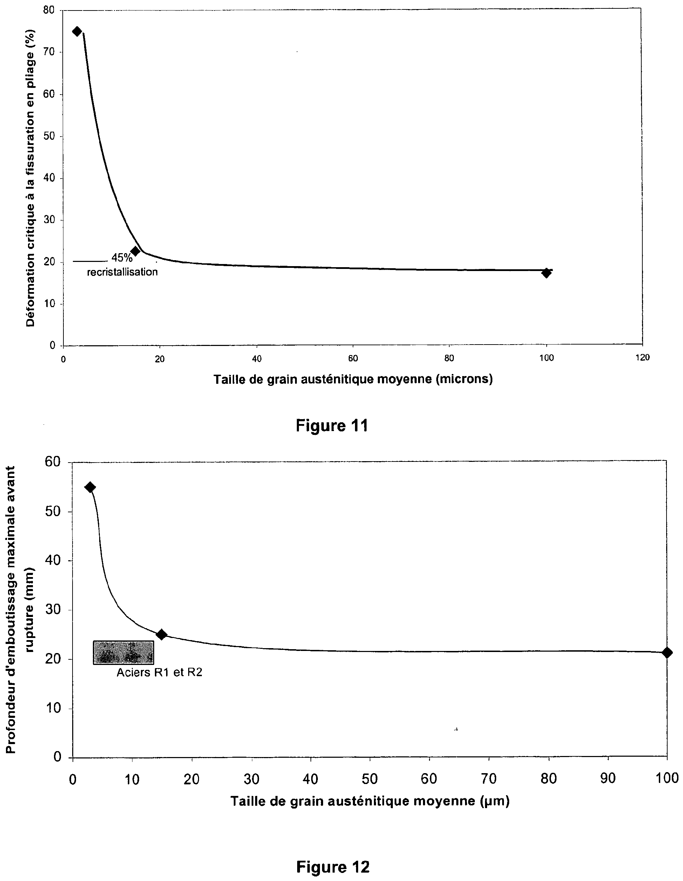

Outre l'aptitude à la résistance à la rupture sous entaille, les aciers de l'invention présentent une grande aptitude à la mise en forme pour la fabrication de pièces plus ou moins complexes. La figure 11 indique l'aptitude au pliage de l'acier I1, dans les différentes conditions de fabrication exposées au tableau 3, c'est-à-dire pour une taille moyenne de grain variant de 3 à 100 microns. Comme on l'a vu précédemment, outre l'avantage d'atteindre une résistance supérieure à 950 MPa, une taille moyenne de grains inférieure à 6 microns permet également d'obtenir une excellente aptitude à la déformation par pliage. Là encore, une recristallisation insuffisante conduit à des résultats inférieurs.

La figure 12 illustre également l'intérêt des aciers laminés à froid et recuits selon l'invention dans le cas dans de déformations complexes telles que celles qui sont rencontrées lors d'essais d'emboutissage par un outil en forme de croix qui sollicite le matériau en expansion et en rétreint. Les essais sont effectués sur flan de dimension 300 x 300 mm$^2$, avec un outil d'une hauteur de 60mm. La figure 12, illustrant la profondeur d'emboutissage maximale avant rupture, indique que les aciers selon l'invention, à faible taille de grain, présentent des caractéristiques très supérieures à celles des aciers de référence R1 et R2.

Ainsi, à résistance égale, les aciers selon l'invention offrent une capacité de déformation très supérieure aux aciers Dual Phase ou « TRIP » conventionnels, et une ténacité accrue. A déformation égale, leur niveau de résistance est très supérieur. Dans le cas de leur utilisation dans l'industrie automobile, ils contribuent à une réduction très efficace du poids des véhicules, tout en accroissant la sécurité en cas de choc. Les tôles d'aciers laminées à chaud ou laminées à froid selon l'invention seront donc utilisées avec profit pour la fabrication de pièces de renfort nécessitant des caractéristiques mécaniques très élevées en conditions de sollicitation statiques ou dynamiques.

## Revendications

1. Tôle laminée à chaud en acier austénitique fer-carbone-manganèse dont la résistance est supérieure à 900 MPa, dont le produit (résistance (MPa) x allongement à rupture (%)) est supérieur à 45000, dont la composition chimique comprend,

   les teneurs étant exprimées en poids :

$$0,5\% \leq C \leq 0,7\%$$

$$17\% \leq Mn \leq 24\%$$

$$Si \leq 3\%$$

$$Al \leq 0,050\%$$

$$S \leq 0,030\%$$

$$P \leq 0,080\%$$

$$N \leq 0,1\%,$$

   et à titre optionnel, un ou plusieurs éléments tels que

$$Cr \leq 1\%$$

$$Mo \leq 0,40\%$$

$$Ni \leq 1\%$$

$$Cu \leq 5\%$$

$$Ti \le 0,50\%$$

$$Nb \le 0,50\%$$

$$V \le 0,50\%,$$

le reste de la composition étant constitué de fer et d'impuretés inévitables résultant de l'élaboration, la fraction recristallisée de l'acier étant supérieure à 75%, la fraction surfacique de carbures précipités de l'acier étant inférieure à 1,5%, la taille moyenne de grain de l'acier étant inférieure à 18 microns

2. Tôle laminée à chaud en acier austénitique fer-carbone-manganèse selon la revendication 1 dont la résistance est supérieure à 900 MPa, dont le produit (résistance (MPa) x allongement à rupture (%)) est supérieur à 60000, dont la composition chimique comprend, les teneurs étant exprimées en poids :

$$0,5\% \le C \le 0,7\%$$

$$17\% \le Mn \le 24\%$$

$$Si \le 3\%$$

$$Al \le 0,050\%$$

$$S \le 0,030\%$$

$$P \le 0,080\%$$

$$N \le 0,1\%,$$

et à titre optionnel, un ou plusieurs éléments tels que

$$Cr \le 1\%$$

$$Mo \le 0,40\%$$

$$Ni \le 1\%$$

$$Cu \le 5\%$$

$$Ti \le 0,50\%$$

$$Nb \leq 0,50\%$$

$$V \leq 0,50\%,$$

le reste de la composition étant constitué de fer et d'impuretés inévitables résultant de l'élaboration, la fraction recristallisée de l'acier étant égale à 100%, la fraction surfacique de carbures précipités de l'acier étant égale à 0%, la taille moyenne de grain de l'acier étant inférieure à 10 microns

3. Procédé de fabrication d'une tôle laminée à chaud en acier fer-carbone-manganèse selon lequel

- on élabore un acier dont la composition chimique comprend, les teneurs étant exprimées en poids :

$$0,5\% \leq C \leq 0,7\%$$

$$17\% \leq Mn \leq 24\%$$

$$Si \leq 3\%$$

$$Al \leq 0,050\%$$

$$S \leq 0,030\%$$

$$P \leq 0,080\%$$

$$N \leq 0,1\%,$$

et à titre optionnel, un ou plusieurs éléments tels que

$$Cr \leq 1\%$$

$$Mo \leq 0,40\%$$

$$Ni \leq 1\%$$

$$Cu \leq 5\%$$

$$Ti \leq 0,50\%$$

$$Nb \leq 0,50\%$$

$$V \leq 0{,}50\%,$$

le reste de la composition étant constitué de fer et d'impuretés inévitables résultant de l'élaboration,
- on procède à la coulée d'un demi-produit à partir de cet acier
- on porte ledit demi-produit de ladite composition d'acier à une température comprise entre 1100 et 1300°C,
- on lamine ledit demi-produit jusqu'à une température de fin de laminage supérieure ou égale à 890°C,
- on observe un délai entre ladite fin de laminage et un refroidissement rapide ultérieur, de telle sorte que le point défini par ledit délai et ladite température de fin de laminage se trouve situé au sein d'une aire définie par le diagramme ABCD'E'F'A, et préférentiellement ABCDEFA, de la figure 1
- on bobine ladite tôle à une température inférieure à 580°C.

4.  Procédé selon la revendication 3, **caractérisé en ce que** la coulée dudit demi-produit est effectuée sous forme de coulée de bandes minces entre cylindres d'acier

5.  Procédé de fabrication selon la revendication 3 ou 4 **caractérisé en ce qu'**on applique, sur ladite tôle laminée à chaud, à l'issue dudit bobinage, une déformation à froid avec un taux de déformation équivalente inférieur ou égal à 30%

6.  Tôle laminée à froid en acier austénitique fer-carbone-manganèse dont la résistance est supérieure à 950MPa, dont le produit résistance (MPa) x allongement à rupture (%) est supérieur à 45000, dont la composition chimique comprend, les teneurs étant exprimées en poids :

$$0{,}5\% \leq C \leq 0{,}7\%$$

$$17\% \leq Mn \leq 24\%$$

$$Si \leq 3\%$$

$$Al \leq 0{,}050\%$$

$$S \leq 0{,}030\%$$

$$P \leq 0{,}080\%$$

$$N \leq 0{,}1\%,$$

et à titre optionnel, un ou plusieurs éléments tels que

$$Cr \leq 1\%$$

$$Mo \leq 0{,}40\%$$

$$Ni \leq 1\%$$

$$Cu \leq 5\%$$

$$Ti \leq 0,50\%$$

$$Nb \leq 0,50\%$$

$$V \leq 0,50\%,$$

le reste de la composition étant constitué de fer et d'impuretés inévitables résultant de l'élaboration, la fraction recristallisée de la structure de l'acier étant supérieure à 75%, la fraction surfacique de carbures précipités de l'acier étant inférieure à 1,5%, la taille moyenne de grains de l'acier étant inférieure à 6 microns

7. Procédé de fabrication d'une tôle laminée à froid en acier austénitique fer-carbone-manganèse, **caractérisé en ce que**

- On approvisionne une tôle laminée à chaud obtenue par le procédé selon la revendication 3 ou 4,
- On effectue au moins une étape de laminage à froid suivi d'un recuit, chaque étape consistant à :

- Laminer à froid ladite tôle
- Effectuer un recuit à une température comprise entre 600 et 900°C, pendant une durée comprise entre 10 et 500 secondes, suivi d'un refroidissement dont la vitesse est supérieure à 0,5°C/s,
- la taille de grain austénitique avant la dernière étape de laminage à froid suivi d'un recuit, étant inférieure à 18 microns

8. Procédé de fabrication d'une tôle laminée à froid selon la revendication 7 **caractérisé en ce qu'**on effectue, après le recuit final, une déformation à froid avec un taux de déformation équivalente inférieur ou égal à 30%

9. Utilisation d'une tôle selon l'une quelconque des revendications 1, 2 ou 6, pour la fabrication d'éléments de renfort sollicités en conditions statique ou dynamique.

10. Utilisation d'une tôle fabriquée au moyen d'un procédé selon l'une quelconque des revendications 3, 4, 5, 7 ou 8, pour la fabrication d'éléments de renfort sollicités en conditions statique ou dynamique.

**Patentansprüche**

1. Warmgewalztes Blech aus austenitischem Eisen-Kohlenstoff-Mangan-Stahl, dessen Festigkeit über 900 MPa beträgt, dessen Produkt (Festigkeit (MPa) x Bruchdehnung (%)) über 45000 beträgt, dessen chemische Zusammensetzung umfasst,
wobei die Gehalte in Gewicht ausgedrückt sind:

$$0,5\% \leq C \leq 0,7\%$$

$$17\% \leq Mn \leq 24\%$$

$$Si \leq 3\%$$

$$Al \leq 0,050\%$$

S ≤ 0,030%

P ≤ 0,080%

N ≤ 0,1%,

und optional ein oder mehrere Element/e wie etwa

Cr ≤ 1%

Mo ≤ 0,40%

Ni ≤ 1%

Cu ≤ 5%

Ti ≤ 0,50%

Nb ≤ 0,50%

V ≤ 0,50%,

wobei der Rest der Zusammensetzung aus Eisen und unvermeidbaren Verunreinigungen besteht, die sich aus der Erarbeitung ergeben, wobei der rekristallisierte Anteil des Stahls über 75% beträgt, der Oberflächenanteil an ausgefällten Carbiden des Stahls weniger als 1,5 beträgt, die mittlere Korngröße des Stahls unter 18 Mikron beträgt.

2. Warmgewalztes Blech aus austenitischem Eisen-Kohlenstoff-Mangan-Stahl nach Anspruch 1, dessen Festigkeit über 900 MPa beträgt, dessen Produkt (Festigkeit (MPa) x Bruchdehnung (%)) über 60000 beträgt, dessen chemische Zusammensetzung umfasst, wobei die Gehalte in Gewicht ausgedrückt sind:

0,5% ≤ C ≤ 0,7%

17% ≤ Mn ≤ 24%

Si ≤ 3%

Al ≤ 0,050%

S ≤ 0,030%

$$P \le 0,080\%$$

$$N \le 0,1\%,$$

und optional ein oder mehrere Element/e wie etwa

$$Cr \le 1\%$$

$$Mo \le 0,40\%$$

$$Ni \le 1\%$$

$$Cu \le 5\%$$

$$Ti \le 0,50\%$$

$$Nb \le 0,50\%$$

$$V \le 0,50\%,$$

wobei der Rest der Zusammensetzung aus Eisen und unvermeidbaren Verunreinigungen besteht, die sich aus der Erarbeitung ergeben, wobei der rekristallisierte Anteil des Stahls gleich 100% ist, der Oberflächenanteil an ausgefällten Carbiden des Stahls gleich 0% ist, die mittlere Korngröße des Stahls unter 10 Mikron beträgt.

3. Verfahren zur Herstellung eines warmgewalzten Blechs aus Eisen-Kohlenstoff-Mangan-Stahl, nach dem ein Stahl erarbeitet wird, dessen chemische Zusammensetzung umfasst, wobei die Gehalte in Gewicht ausgedrückt sind:

$$0,5\% \le C \le 0,7\%$$

$$17\% \le Mn \le 24\%$$

$$Si \le 3\%$$

$$Al \le 0,050\%$$

$$S \le 0,030\%$$

$$P \le 0,080\%$$

$$N \leq 0,1\%,$$

und optional ein oder mehrere Element/e wie etwa

$$Cr \leq 1\%$$

$$Mo \leq 0,40\%$$

$$Ni \leq 1\%$$

$$Cu \leq 5\%$$

$$Ti \leq 0,50\%$$

$$Nb \leq 0,50\%$$

$$V \leq 0,50\%,$$

wobei der Rest der Zusammensetzung aus Eisen und unvermeidbaren Verunreinigungen besteht, die sich aus der Erarbeitung ergeben,

- das Gießen eines Halbprodukts aus diesem Stahl vorgenommen wird,
- das Halbprodukt dieser Stahlzusammensetzung auf eine Temperatur zwischen 1100 und 1300°C gebracht wird,
- das Halbprodukt bis auf eine Walzendtemperatur von über oder gleich 890°C gewalzt wird,
- eine Verzögerung zwischen dem Walzende und einer späteren Schnellabkühlung eingehalten wird, und zwar so, dass der durch die Verzögerung und die Wanzendtemperatur vorgegebene Punkt innerhalb eines Bereichs angesiedelt ist, der durch das Diagramm ABCD'E'F'A und vorzugsweise ABCDEFA von Figur 1 vorgegeben ist,
- das Blech bei einer Temperatur unter 580°C aufgewickelt wird.

4. Verfahren nach Anspruch 3, **dadurch gekennzeichnet, dass** das Gießen dieses Halbprodukts in Form eines Gießens von dünnen Bändern zwischen Stahlzylindern erfolgt.

5. Herstellungsverfahren nach Anspruch 3 oder 4, **dadurch gekennzeichnet, dass** auf das warmgewalzte Blech am Ende des Aufwickelns eine Kaltumformung mit einer äquivalenten Umformungsrate von unter oder gleich 30% angewendet wird.

6. Warmgewalztes Blech aus austenitischem Eisen-Kohlenstoff-Mangan-Stahl, dessen Festigkeit über 950 MPa beträgt, dessen Produkt (Festigkeit (MPa) x Bruchdehnung (%)) über 45000 beträgt, dessen chemische Zusammensetzung umfasst, wobei die Gehalte in Gewicht ausgedrückt sind:

$$0,5\% \leq C \leq 0,7\%$$

$$17\% \leq Mn \leq 24\%$$

$$Si \leq 3\%$$

$$Al \leq 0,050\%$$

$$S \leq 0,030\%$$

$$P \leq 0,080\%$$

$$N \leq 0,1\%,$$

und optional ein oder mehrere Element/e wie etwa

$$Cr \leq 1\%$$

$$Mo \leq 0,40\%$$

$$Ni \leq 1\%$$

$$Cu \leq 5\%$$

$$Ti \leq 0,50\%$$

$$Nb \leq 0,50\%$$

$$V \leq 0,50\%,$$

wobei der Rest der Zusammensetzung aus Eisen und unvermeidbaren Verunreinigungen besteht, die sich aus der Erarbeitung ergeben, wobei der rekristallisierte Anteil der Struktur des Stahls über 75% beträgt, der Oberflächenanteil an ausgefällten Carbiden des Stahls weniger als 1,5 beträgt, die mittlere Korngröße des Stahls unter 6 Mikron beträgt.

7. Verfahren zur Herstellung eines kaltgewalzten Blechs aus austenitischem Eisen-Kohlenstoff-Mangan-Stahl, **dadurch gekennzeichnet, dass**

- ein warmgewalztes Blech bereitgestellt wird, das durch das Verfahren nach Anspruch 3 oder 4 erhalten ist,
- mindestens ein Kaltwalzschritt, gefolgt von einer Temperung durchgeführt wird, wobei jeder Schritt darin besteht:

- das Blech kaltzuwalzen,
- eine Temperung bei einer Temperatur zwischen 600 und 900°C während einer Dauer zwischen 10 und 500 Sekunden, gefolgt von einer Abkühlung durchzuführen, deren Geschwindigkeit über 0,5°C/s beträgt,
- wobei die austenitische Korngröße vor dem letzten Kaltwalzschritt, auf dem eine Temperung folgt, unter 18 Mikron beträgt.

8. Verfahren zur Herstellung eines kaltgewalzten Blechs nach Anspruch 7, **dadurch gekennzeichnet, dass** nach der endgültigen Temperung eine Kaltumformung mit einer äquivalenten Umformungsrate von unter oder gleich 30% erfolgt.

9. Verwendung eines Blechs nach einem der Ansprüche 1, 2 oder 6 für die Herstellung von unter Statik- oder Dynamikbedingungen beaufschlagten Verstärkungselementen.

10. Verwendung eines mittels eines Verfahrens nach einem der Ansprüche 3, 4, 5, 7 oder 8 hergestellten Blechs für die Herstellung von unter Statik- oder Dynamikbedingungen beaufschlagten Verstärkungselementen.

**Claims**

1. Hot-rolled sheet of austenitic iron-carbon-manganese steel, the strength of which is greater than 900 MPa, the product strength (MPa) x elongation at break (%) of which is greater than 45000, the chemical composition of which comprises,
the contents being expressed by weight:

$$0.5\% \leq C \leq 0.7\%$$

$$17\% \leq Mn \leq 24\%$$

$$Si \leq 3\%$$

$$Al \leq 0.050\%$$

$$S \leq 0.030\%$$

$$P \leq 0.080\%$$

$$N \leq 0.1\%,$$

and optionally one or more elements such as

$$Cr \leq 1\%$$

$$Mo \leq 0.40\%$$

$$Ni \leq 1\%$$

$$Cu \leq 5\%$$

$$Ti \leq 0.50\%$$

$$Nb \leq 0.50\%$$

$$V \leq 0.50\%,$$

the remainder of the composition consisting of iron and inevitable impurities resulting from production, the recrystallized fraction of the steel being greater than 75%, the surface fraction of precipitated carbides of the steel being less than 1.5%, the mean grain size of the steel being less than 18 microns.

2. Hot-rolled sheet of austenitic iron-carbon-manganese steel according to claim 1, the strength of which is greater than 900 MPa, the product strength (MPa) x elongation at break (%) of which is greater than 60000, the chemical composition of which comprises, the contents being expressed by weight:

$$0.5\% \leq C \leq 0.7\%$$

$$17\% \leq Mn \leq 24\%$$

$$Si \leq 3\%$$

$$Al \leq 0.050\%$$

$$S \leq 0.030\%$$

$$P \leq 0.080\%$$

$$N \leq 0.1\%,$$

and optionally one or more elements such as

$$Cr \leq 1\%$$

$$Mo \leq 0.40\%$$

$$Ni \leq 1\%$$

$$Cu \leq 5\%$$

$$Ti \leq 0.50\%$$

$$Nb \leq 0.50\%$$

$$V \leq 0.50\%,$$

the remainder of the composition consisting of iron and inevitable impurities resulting from production, the recrystallized fraction of the steel being equal to 100%, the surface fraction of precipitated carbides of the steel being equal to 0%, the mean grain size of the steel being less than 10 microns.

3. Method of producing a sheet of hot-rolled iron-carbon-manganese steel, according to which

- a steel is produced, the chemical composition of which comprises, the contents being expressed by weight:

$$0.5\% \leq C \leq 0.7\%$$

$$17\% \leq Mn \leq 24\%$$

$$Si \leq 3\%$$

$$Al \leq 0.050\%$$

$$S \leq 0.030\%$$

$$P \leq 0.080\%$$

$$N \leq 0.1\%,$$

and optionally one or more elements such as

$$Cr \leq 1\%$$

$$Mo \leq 0.40\%$$

$$Ni \leq 1\%$$

$$Cu \leq 5\%$$

$$Ti \leq 0.50\%$$

$$Nb \leq 0.50\%$$

$$V \leq 0.50\%,$$

the remainder of the composition consisting of iron and inevitable impurities resulting from production,
- a semi-finished product is cast from this steel
- said semi-finished product of said steel composition is taken to a temperature of between 1100 and 1300°C,
- said semi-finished product is rolled to a final rolling temperature greater than or equal to 890°C,
- time between said final rolling and a rapid subsequent cooling is observed such that the point defined by said time and said final rolling temperature is within an area defined by diagram ABCD'E'F'A and preferably ABCDEFA in Figure 1
- said sheet is coiled at a temperature less than 580°C.

4.  Method according to claim 3, **characterised in that** casting of said semi-finished product is conducted in the form of casting of thin strips between steel cylinders.

5.  Production method according to claim 3 or 4, **characterised in that** cold forming with an equivalent deformation rate less than or equal to 30% is applied to said hot-rolled sheet at the end of said coiling.

6.  Cold-rolled sheet of austenitic iron-carbon-manganese steel, the strength of which is greater than 950 MPa, the product strength (MPa) x elongation at break (%)of which is greater than 45000, the chemical composition of which comprises, the contents being expressed by weight:

$$0.5\% \leq C \leq 0.7\%$$

$$17\% \leq Mn \leq 24\%$$

$$Si \leq 3\%$$

$$Al \leq 0.050\%$$

$$S \leq 0.030\%$$

$$P \leq 0.080\%$$

$$N \leq 0.1\%,$$

and optionally one or more elements such as

$$Cr \leq 1\%$$

$$Mo \leq 0.40\%$$

$$Ni \leq 1\%$$

$$Cu \leq 5\%$$

$$Ti \leq 0.50\%$$

$$Nb \leq 0.50\%$$

$$V \le 0.50\%,$$

the remainder of the composition consisting of iron and inevitable impurities resulting from production, the recrystallized fraction of the steel structure being greater than 75%, the surface fraction of precipitated carbides of the steel being less than 1.5%, the mean grain size of the steel being less than 6 microns.

7. Method of producing a cold-rolled sheet of austenitic iron-carbon-manganese steel, **characterised in that**

- a hot-rolled sheet obtained by the method according to claim 3 or 4 is supplied,
- at least one cold-rolling stage followed by annealing is carried out, each stage consisting of:

- cold-rolling said sheet
- carrying out annealing at a temperature of between 600 and 900°C for a period of between 10 and 500 seconds followed by cooling, the rate of which is greater than 0.5°C/s,
- the austenitic grain size before the last cold-rolling stage followed by annealing being less than 18 microns.

8. Method of producing a cold-rolled sheet according to claim 7, **characterised in that** cold forming at an equivalent deformation rate less than or equal to 30% is carried out after the final annealing.

9. Use of a sheet according to any of claims 1, 2 or 6 for the production of reinforcement elements stressed under static or dynamic conditions.

10. Use of a sheet produced by means of a method according to any of claims 3, 4, 5, 7 or 8 for the production of reinforcement elements stressed under static or dynamic conditions.

Figure 1

Figure 2

Figure 3

Figure 4

Figure 5

Figure 6

Figure 7

Figure 8

**Figure 9**

**Figure 10**

**Figure 11**

**Figure 12**

**EP 1 649 069 B1**

## RÉFÉRENCES CITÉES DANS LA DESCRIPTION

**Documents brevets cités dans la description**

- EP 0573641 A
- EP 1067203 A